# EUROPÄISCHE PATENTANMELDUNG

(11) **EP 0 634 852 A2**
(43) Veröffentlichungstag der Anmeldung: **18.01.1995**
(21) Anmeldenummer: 94107904.8
(22) Anmeldetag: 21.05.1994
(51) Int. Cl.: H04L 9/32

(54) **Verfahren zur Fernabfrage einer Zugangsberechtigung für eine Teilnehmereinrichtung**

(30) Priorität: 16.07.1993 DE 4323847
(71) Anmelder: GRUNDIG E.M.V. Elektro-Mechanische Versuchsanstalt Max Grundig GmbH & Co. KG, D-90762 Fürth (DE)
(72) Erfinder: Färber, Dietmar, GRUNDIG E.M.V., D-90748 Fürth (DE); Breitenbach, Andreas, GRUNDIG E.M.V., D-90748 Fürth (DE); Eibenberger, Konrad, GRUNDIG E.M.V., D-90748 Fürth (DE)

(57) **Zusammenfassung**

Das Verfahren ermöglicht es über ein Nachrichtennetz aus der Seriennummer einer daran angeschlossenen Teilnehmereinrichtung (Fernsprechapparat, Anrufbeantworter, Fax, Modem, Funktelefon usw.) mittels Fernabfragegerät die Zugangsberechtigung zu decodieren. Das Fernabfragegerät enthält eine Steuereinheit, der den Entschlüsselungsalgorithmus zur Umrechnung der Seriennummer in die Zugangsberechtigung enthält und der nicht über die Anschlüsse der Steuereinheit ausgelesen werden kann. Weiterhin weist das Fernabfragegerät einen Speicher für Seriennummern gestohlen gemeldeter Teilnehmereinrichtungen auf. Bevor einem Benutzer seine Zugangsberechtigung mitgeteilt wird, wird zunächst überprüft, ob die Seriennummer zu einer gestohlen gemeldeten Teilnehmereinrichtung gehört. Zusätzlich ist mit dem Fernabfragegerät eine Fehlerdiagnose bei der Teilnehmereinrichtung möglich.

Das erfindunggemäße Verfahren kann bei allen Teilnehmereinrichtungen angewendet werden, die eine Seriennummer und eine Zugangsberechtigung haben und an einem Nachrichtennetz angeschlossen sind.

## Beschreibung

Die Erfindung betrifft ein Verfahren zur Fernabfrage einer Zugangsberechtigung und ein Fernabfragegerät zur Durchführung des Verfahrens gemäß den Patentansprüchen 1 und 5.

Aufgrund der stetigen Entwicklung von der Industrie- hin zur Informations- und Kommunikationsgesellschaft gewinnt eine möglichst weitgehende Erreichbarkeit von Personen immer mehr an Bedeutung. Ersatzweise wird zumindest die Möglichkeit gefordert, eine Nachricht, insbesondere Sprachnachricht, hinterlassen zu können. Daher weisen Teilnehmereinrichtungen wie Fernsprechapparat, Anrufbeantworter mit Fernabfrage usw. einen immer größeren Verbreitungsgrad auf.

Trotz des zunehmenden Kommunikationsaufkommens soll jedoch immer sichergestellt sein, daß nur die Personen eine Nachricht empfangen oder abrufen können, für die diese Nachricht auch bestimmt war. Um dies sichzustellen, ist beispielsweise zum Abruf einer Nachricht aus einem Sprachspeicher (Fernabfrage von auf einem Anrufbeantworter aufgezeichneten Nachrichten) eine Zugangsberechtigung erforderlich. Diese Zugangsberechtigung kann sehr unterschiedlich sein. Sie kann aus einer Kombination verschiedener Frequenzen, die über ein Nachrichtennetz übertragen werden, bestehen (DTMF-Signal als Fernabfragekennung beim Anrufbeantworter), oder aus einer Kombination alphanumerischer Zeichen (Paßwort für ein Computerprogramm oder Computernetz). Wurde eine Zugangsberechtigung eingegeben, wird sie anschließend mit einer im Gerät, zu dem Zugang begehrt wird, abgespeicherten Zugangsberechtigung verglichen. Stellt das Gerät fest, daß eingegebene und abgespeicherte Zugangsberechtigung übereinstimmen, wird der Zugang gewährt. In der Regel ist dabei die im Gerät abgespeicherte Zugangsberechtigung geschützt, so daß sie entweder gar nicht oder nur verschlüsselt ausgegeben wird. Der bei einer Verschlüsselung erforderliche Codeschlüssel für die Zugangsberechtigung ist meist nur einem sehr begrenzten Personenkreis zugänglich.

Vergißt ein Benutzer seine Zugangsberechtigung, so kann er sich die verschlüsselte Zugangsberechtigung vom Gerät ausgeben lassen, und diese z.B. dem Hersteller, zusammen mit einem Eigentumsnachweis für dieses Gerät, schicken. Der Hersteller entschlüsselt, nach einer Überprüfung des Eigentumsnachweises, die Zugangsberechtigung und sendet sie an den Benutzer zurück.

Kann die Zugangsberechtigung nicht ausgegeben werden, ist das Auswechseln oder Auslesen des Speicher für die Zugangsberechtigung erforderlich. In beiden Fällen ist das Gerät zu öffnen und Spezialwerkzeug notwendig, wodurch Zeit- und Kostenaufwand groß sind.

Aus der DE-A1-41 30 024 ist ein ferngesteuert programmierbares Funktelefon und eine Fernsteuerprogrammierungseinheit bekannt. Betriebsparameter und Eigenschaften des Funktelefons können vom Hersteller neu programmiert und über Funk übertragen werden, ohne daß der Benutzer tätig werden muß. Bei bestimmten Befehlen ist es jedoch erforderlich, daß sowohl der Benutzer einen Zugriffscode, als auch der Programmierer ein Paßwort eingibt. Das Paßwort wird mit einem, in einem Speicher des Funktelefons abgespeicherten Paßwort auf Gleichheit überprüft.

Von Nachteil bei diesem Funktelefon ist, daß es nur programmiert werden kann, wenn der Benutzer den Zugriffscode eingegeben hat. Vergißt der Benutzer den Zugriffscode, ist eine aufwendige Reparatur erforderlich.

Aus der EP-A2-0 447 934 ist ein Verfahren zur Eingabe von vermittlungstechnischen Kunden- und Betriebsdaten in Kommunikationsvermittlungsanlagen und/oder programmierbaren Endgeräten bekannt. Dabei wird das Endgerät mit einem Empfänger verbunden, der die Signale eines Fernbedienungsgerätes empfängt und in den Speicher des Engerätes einschreibt. Das Fernbedienungsgerät weist eine Wähltastatur, Funktionstasten, eine Anzeige und eine Lesevorrichtung für ein Speichermedium auf. Bevor Daten im Speicher des Endgerätes oder der Vermittlungsanlage abgespeichert werden, ist über die Wähltastatur des Fernbedienungsgerätes eine, für jedes zu programmierende Gerät individuelle, geheime Codezahl einzugeben. Diese geheime Codezahl kann auch auf dem Speichermedium abgespeichert sein.

Auch dieses Verfahren weist den Nachteil auf, daß die geheime Codezahl zwar einerseits geheim gehalten werden muß, um unberechtigte Manipulationen zu verhindern, andererseits aber dem zuständigen Personal bekannt sein muß, um eine Programmierung zu ermöglichen.

Aus der DE-A1-42 23 596 ist eine Schaltungsanordnung zur telefonischen Fernabfrage und Fernsteuerung von Schaltzuständen und Schaltfunktionen von elektrischen Funktionsteilen bekannt. Diese Schaltungsanordnung wird von einem Mikrocontroller gesteuert, der über eine Leitungsanpassung und eine Ruferkennung Signale von der Fernsprechleitung einliest, die Leitungsbelegung, Haltung und Auslösung steuert, und über ein Installations-Bussystem die Fernabfrage oder Fernsteuerung der an das Bussystem angeschlossenen Bauteile durchführt. Weiterhin steuert der Mikrocontroller die Ausgabe von gespeicherten Daten und Sprachsignalen über die Fernsprechleitung. Um nur einem begrenzten Personenkreis die Fernabfrage und Fernsteuerung zu ermöglichen, weist der Mikrocontroller einen Rückrufspeicher auf und wählt die darin gespeicherten Rufnummern automatisch an, nachdem ein Rufsignal eingegangen ist und die Verbindung unmittelbar danach ausgelöst wurde.

Diese Schaltungsanordnung weist den Nachteil auf, daß auch unbefugte Personen den Verbindungsaufbau mit den Rufnummern des Rufnummernspeichers veranlassen können, wodurch die Verbindungsgebühren stark steigen. Aber auch bei einer Fernabfrage oder einem Fernsteuervorgang müssen zwei Verbindungen aufgebaut werden, wodurch die Verbindungsgebühren unangemessen hoch sind.

Aus der DE-A1-42 02 552 ist eine Fernsteuerung sowie eine Vorrichtung zum Abspeichern eines Identifikationscodes in der Fernsteuerung bekannt. Die Fernsteuerung besteht dabei aus einer Steuereinheit, Übertragungs- und Empfängermitteln, sowie Speichermitteln, wobei letztere einen Identifikationscode speichern, und wird durch ein Gehäuse umschlossen. Über die Empfängermittel kann ein neuer Identifikationscode in den Speicher der Fernsteuerung eingespeicher werden, ohne daß das Gehäuse geöffnet werden muß.

Diese Fernsteuerung weist den Nachteil auf, daß jeder, der zur Fernbedienung Zugang hat, den Identifikationscode ändern kann. Eine spezielle Zugangsberechtigung ist nicht vorgesehen.

Die Aufgabe der Erfindung besteht darin, eine möglichst einfache Fernabfrage einer in einer Teilnehmereinrichtung gespeicherten Zugangsberechtigung zu ermöglichen, bei der ein Mißbrauch zuverlässig verhindert wird.

Diese Aufgabe wird erfindungsgemäß durch die Patentansprüche 1 und 5 gelöst.

Das erfindungsgemäße Verfahren weist den Vorteil auf, daß die Seriennummer der Teilnehmereinrichtung, die in der Regel ohnehin in einem Speicher der Teilnehmereinrichtung abgespeichert wird und sich für jede Teilnehmereinrichtung unterscheidet, die Zugangsberechtigung codiert. Dadurch ist kein zusätzlicher Speicher für die Zugangsberechtigung erforderlich. Dadurch, daß für die Berechnung der Zugangsberechtigung aus der Seriennummer der Teilnehmereinrichtung ein Algorithmus erforderlich ist, der nur in einem speziellen Fernabfragegerät gespeichert ist, kann der Personenkreis, der eine Zugangsberechtigung berechnen kann, eingeschränkt werden.

Das Verfahren nach Patentanspruch 2 weist den Vorteil auf, daß eine Reihe von Möglichkeiten bestehen, die Zugangsberechtigung auszugeben. Es ist eine optische und/oder akustische Ausgabemöglichkeit an der Teilnehmereinrichtung unmittelbar nach der Berechnung der Zugangsberechtigung möglich. Dadurch kann die Zugangsberechtigung außerordentlich schnell ausgegeben werden. Weiterhin ist eine optische und/oder akustische Ausgabemöglichkeit am Fernabfragegerät möglich. Dadurch kann, insbesondere bei durch Hersteller oder Händler registrierten Eigentümern, sichergestellt werden, daß die Zugangsberechtigung nur dem Eigentümer der Teilnehmereinrichtung mitgeteilt wird. Weiterhin ist durch die akustische und/oder optische Ausgabe sichergestellt, daß auch behinderte Menschen die Zugangsberechtigung erfahren.

Das Verfahren nach Patentanspruch 3 weist den Vorteil auf, daß sowohl zusätzlich als auch alternativ zum Auslesen der Seriennummer aus einem Speicher der Teilnehmereinrichtung eine Fehlerdiagnose bei der Teilnehmereinrichtung durch das Fernabfragegerät durchgeführt wird. Falls dabei Fehler entdeckt werden, können sie eventuell sofort durch das Fernabfragegerät behoben werden, oder es wird dem Teilnehmer durch eine akustische und/oder optische Mitteilung die fehlerhafte Baugruppe mitgeteilt.

Das Verfahren nach Patentanspruch 4 weist den Vorteil auf, daß gestohlen gemeldete Teilnehmereinrichtungen vom Fernabfragegerät sofort erkannt werden. Es wird durch das Fernabfragegerät keine Zugangsberechtigung ermittelt, sondern Maßnahmen zur Ergreifung des Diebes eingeleitet.

Das Fernabfragegerät nach Patentanspruch 5 weist den Vorteil auf, daß durch die monolithische Integration des Speichers für den Algorithmus zur Berechnung der Zugangsberechtigung in die Steuereinheit des Fernabfragegerätes und dadurch, daß dieser Speicher keine Anschlüsse aufweist, um ihn von außerhalb der integrierten Schaltung auszulesen, der Algorithmus nicht ausgelesen werden kann. Weiterhin kann an das Fernabfragegerät ein Massenspeicher angeschlossen werden, in dem die Seriennummern von gestohlenen Teilnehmereinrichtungen gespeichert sind. Dadurch kann das Fernabfragegerät automatisch erkennen, ob eine Berechnung und Übertragung der Zugangsberechtigung zulässig ist, oder nicht.
Weiterhin kann die Rufnummer durch das Fernabfragegerät ausgegeben werden, unter der eine gestohlene Teilnehmereinrichtung erreicht wird, so daß deren Dieb gefaßt werden kann.

Das Fernabfragegerät nach Patentanspruch 6 weist den Vorteil auf, daß sowohl die Eingabe für das Fernabfragegerät durch ein Speichermedium erfolgt, als auch die Ausgabe des Fernabfragegerätes gespeichert wird. Dadurch kann das Fernabfragegerät vollautomatisch betrieben werden.

Die Erfindung wird im folgenden anhand eines in der Zeichnung dargestellten Ausführungsbeispiels näher erläutert und beschrieben. Es zeigt:
- Fig. 1: den Ablaufplan beim Feststellen der Zugangsberechtigung durch das Fernabfragegerät und
- Fig. 2: ein Blockschaltbild des Fernabfragegerätes und einer Teilnehmereinrichtung.

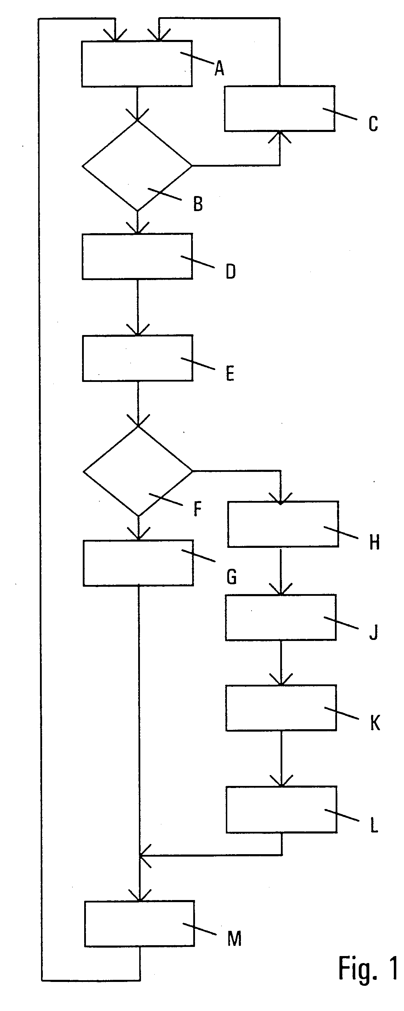

Fig. 1 zeigt die prinzipielle Vorgehensweise bei der Ermittlung der Zugangsberechtigung ZB einer Teilnehmereinrichtung TE. Um den Arbeitsablauf möglichst weitgehend zu automatisieren, muß nicht jede Rufnummer einzeln von einer Bedienperson in das Fernabfragegerät FAG eingegeben werden, sondern es kann eine gewisse Anzahl Rufnummern in einem Rufnummernspeicher SPRN des Fernabfragegerätes FAG gespeichert werden, zu denen der Wählautomat im Verfahrensschritt A der Reihe nach eine Verbindung herstellt. Alternativ kann auch der Teilnehmer eine Rufnummer wählen, mit der eine Verbindung zum Fernabfragegerät FAG hergestellt werden kann. Hierbei kann es jedoch vorkommen, daß der Anschluß gerade besetzt ist. Stellt der Wählautomat des Fernabfragegerätes FAG die Verbindung zu einem Teilnehmer her, muß vorher dieser Teilnehmer dem Betreiber des Fernabfragegerätes FAG seine Rufnummer, und damit auch seine Adresse, übermittelt haben. Dies kann auf beliebige Art und Weise erfolgen (fernmündlich, schriftlich usw.). Ist der vom Wählautomaten im Schritt A gewählte Anschluß gerade nicht erreichbar, wird dies im Schritt B bei der Überprüfung des Belegungszustandes festgestellt.Diese Rufnummer wird im Schritt C am Ende der Liste der im Rufnummernspeicher SPRN abgespeicherten Rufnummer hinzugefügt, und der Wählautomat wählt im Schritt A die nächste abgespeicherte Rufnummer.

Wurde eine Verbindung zu einer Teilnehmereinrichtung TE hergestellt, überträgt das Fernabfragegerät FAG im Schritt D über die Übertragungsmittel Ü ein spezielles Steuerwort, um die Teilnehmereinrichtung TE in den Auslesemodus zu bringen. Weiterhin kann in der Anzeige der Teilnehmereinrichtung TE ein Hinweis auf den Auslesemodus ausgegeben werden. Im Auslesemodus wird vom Fernabfragegerät FAG im Schritt E auf den Speicher SPTE der Teilnehmereinrichtung TE zugegriffen, der die Seriennummer SN enthält. Diese wird zur Steuereinheit des Fernabfragegerätes FAG übertragen.

Anschließend wird im Schritt F überprüft, ob die Seriennummer SN der Teilnehmereinrichtung TE mit einer Seriennummer SN übereinstimmt, die im Speicher SP2FAG des Fernabfragegerätes FAG abgespeichert ist und die zu einer gestohlen gemeldeten Teilnehmereinrichtung TE gehört. Ist dies der Fall, wird die Zugangsberechtigung ZB nicht ermittelt und auch nicht übertragen. In der gestohlenen Teilnehmereinrichtung TE wird im Schritt G der Auslesemodus beendet und der normale Betriebmodus wieder hergestellt, so daß der Benutzer dieser Teilnehmereinrichtung TE keinen Hinweis darauf erhält, daß seine Teilnehmereinrichtung TE als gestohlen erkannt wurde. Vom Fernabfragegerät FAG werden die zu einer als gestohlen erkannten Teilnehmereinrichtung TE gehörigen Daten, wie Rufnummer und Adresse des Besitzers, in einem speziell dafür vorgesehenen Speicherbereich zwischengespeichert und/oder über einen an dem Fernabfragegerät FAG angeschlossenen Drucker ausgegeben. Weiterhin besteht die Möglichkeit, die Daten der gestohlenen Teilnehmereinrichtung TE unmittelbar an eine Strafverfolgungsbehörde zu übertragen.

Wird die Teilnehmereinrichtung TE nicht als gestohlen erkannt, wird der im Speicher SPFAG des Fernabfragegerätes FAG abgespeicherte Algorithmus AG auf die Seriennummer SN angewandt und so die Zugangsberechtigung ZB im Schritt H ermittelt. Die Ausgabe der Zugangsberechtigung ZB kann verzögerungsfrei an der Teilnehmereinrichtung TE erfolgen. Sie kann auch am Fernabfragegerät FAG erfolgen und anschließend dem Eigentümer der Teilnehmereinrichtung TE beispielsweise per Briefpost, zusammen mit einer Rechnung, zugestellt werden. Um bei einer gestohlenen und bei einer nicht gestohlenen Teilnehmereinrichtung TE identische Ausgaben zu erzielen, ist letztere Möglichkeit zu bevorzugen.

Nachdem die Zugangsberechtigung ZB derart ermittelt wurde, besteht die Möglichkeit, verschiedene Baugruppen der Teilnehmereinrichtung TE zu testen. Hierfür wird im Schritt J durch die Übertragung eines speziellen Steuerwortes die Teilnehmereinrichtung TE in den Prüfmodus gebracht. Danach wird festgestellt, um welche Art Teilnehmereinrichtung TE es sich handelt, wobei zwischen Fernsprechapparat, Anrufbeantworter, Telefax, Modem usw., sowie Kombinationen dieser Geräte unterschieden wird.

Die Art der Teilnehmereinrichtung TE kann dabei an der Seriennummer SN oder an anderen im Speicher SPTE abgespeicherten Daten erkannt werden. Durch die Art der Teilnehmereinrichtung TE ist auch bekannt, welche Baugruppen sie aufweist, die vom Fernabfragegerät FAG getestet werden können. Der Test selbst kann auf verschiedene Weisen durchgeführt werden. Es besteht die Möglichkeit, daß das Fernabfragegerät FAG die einzelnen Baugruppen der Teilnehmereinrichtung TE im Schritt K direkt ansteuert und das Ausgangssignal der Teilnehmereinrichtung TE mit einem für die jeweilige Baugruppe abgespeicherten und erwarteten Ausgangssignal im Schritt L vergleicht. Kann bei diesem Vergleich keine Übereinstimmung festgestellt werden, wird die angesteuerte Baugruppe als fehlerhaft erkannt.

Alternativ dazu kann das Fernabfragegerät FAG in der Teilnehmereinrichtung TE ein Testprogramm starten und lediglich das Ergebnis des Testprogramms überprüfen.

Eine weitere Testmoglichkeit für die Teilnehmereinrichtung TE besteht darin, daß die Steuereinheit STTE der Teilnehmereinrichtung TE eine Fehlfunktion im normalen Betriebsmodus erkennt und einen der fehlerhaften Baugruppe zugeordneten Fehlercode in einem speziellen Fehlerspeicher abspeichert. Im Prüfmodus kann dann das Fernabfragegerät FAG diesen Fehlerspeicher auslesen.

Ist der Test beendet, kann eine Meldung an der Teilnehmereinrichtung TE in akustischer und/oder optischer Form ausgegeben werden, die die getesteten Baugruppen und die festgestellten Fehler beinhaltet. Eine derartige Meldung wird im Fernabfragegerät gespeichert und dient anschließend z.B. der Gebührenberechung.

Schließlich wird die Teilnehmereinrichtung TE im Schritt M wieder in den normalen Betriebsmodus gebracht und die Verbindung ausgelöst. Danach kann das Fernabfragegerät FAG im Schritt A die nächste Rufnummer zum Verbindungsaufbau verwenden und das Verfahren wiederholen.

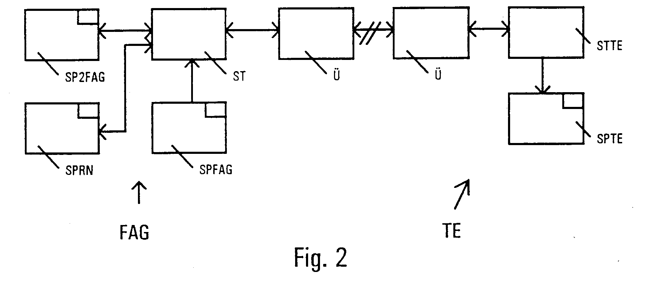

Fig. 2 zeigt das Fernabfragegerät FAG zur Ermittlung der Zugangsberechtigung ZB und zum Test von Teilnehmereinrichtungen TE, bestehend im wesentlichen aus Übertragungsmitteln Ü, einer Steuereinheit ST und verschiedenen Speichern SPFAG, SP2FAG und SPRN, die über einen Bus miteinander verbunden sind. Die übertragungsmittel Ü setzen das interne Datenformat des Fernabfragegerätes FAG, welches einen Daten-, Adress- und Steuerbus aufweist, in ein Datenformat um, das über das Nachrichtennetz übertragen werden kann und umgekehrt. Dadurch kann das Fernabfragegerat FAG bidirektional Daten über das Nachrichtennetz zur Teilnehmereinrichtung TE senden und von ihr empfangen.

Mit der Steuereinheit ST sind alle übrigen Baugruppen des Fernabfragegeräts FAG über einen Bus verbunden. Um nicht nach jeder ermittelten Zugangsberechtigung ZB die nächste Rufnummer einer Teilnehmereinrichtung TE eingeben zu müssen, ist ein Rufnummernspeicher SPRN im Fernabfragegerät FAG vorgesehen, aus dem die Steuereinheit ST die Rufnummern nacheinander ausliest. Der Rufnummernspeicher SPRN kann ein auswechselbarer Massenspeicher mit zugehörigem Lesegerät sein, der nicht nur die Rufnummern sondern auch noch sonstige Daten wie z.B. die zugehörigen Adressen der Besitzer der Teilnehmereinrichtungen enthält. Die von der Steuereinheit ST ausgelesene Rufnummer wird an das Nachrichtennetz weitergeleitet, wobei die Steuereinheit ST die Funktion des Wählautomaten hat. Die Steuereinheit ST weist einen monolithisch integrierten Speicher SPFAG auf, der den Algorithmus AG enthält, und dessen Inhalt nicht über die Anschlüsse der Steuereinheit ST ausgegeben werden kann. Mit Hilfe dieses Algorithmus AG und mit der aus dem Speicher SPTE der Teilnehmereinrichtung TE ausgelesenen Seriennummer SN berechnet die Steuereinheit ST die Zugangsberechtigung ZB, nachdem die Steuereinheit ST die Seriennummer SN mit den im Speicher SP2FAG abgespeicherten Seriennummern SN verglichen und keine Übereinstimmung festgestellt hat.

Stimmt die Seriennummer SN der Teilnehmereinrichtung TE jedoch mit einer im Speicher SP2FAG gespeicherten Seriennummer SN überein, berechnet die Steuereinheit ST die Zugangsberechtigung ZB nicht, sondern bringt die Teilnehmereinrichtung TE wieder in den normalen Betriebsmodus. Damit der Benutzer nicht merkt, daß die Teilnehmereinrichtung TE als gestohlen erkannt wurde, veranlaßt die Steuereinrichtung ST ggf. noch die Anzeige oder akustische Ausgabe verschiedener Meldungen an der Teilnehmereinrichtung TE. Die Steuereinheit ST steuert anschließend einen Drucker an, der die Rufnummer und sonstige Daten des Rufnummernspeichers SPRN der gestohlenen Teilnehmereinrichtung TE ausdruckt. Außerdem kann die Steuereinheit ST einen Verbindungsaufbau zur sofortigen Weiterleitung dieser Daten durchführen.

Wurde die Zugangsberechtigung ZB ermittelt, bestehen mehrere Möglichkeiten, wie sie von der Steuereinheit ST ausgegeben werden kann. Neben einer optischen Ausgabe auf einer Anzeigeeinheit an Teilnehmereinrichtung TE und/oder Fernabfragegerät FAG kann die Zugangsberechtigung ZB auch über einen Sprachsynthesizer und Lautsprecher akustisch insbesondere an der Teilnehmereinrichtung TE ausgegeben werden oder sie kann am Fernabfragegerät FAG zwischengespeichert werden für eine schriftliche Ausgabe über einen Drucker.

Im Anschluß an die Ermittlung der Zugangsberechtigung ZB kann das Fernabfragegerät FAG eine Prüfung der Baugruppen der Teilnehmereinrichtung TE durchführen. Von der Steuereinheit ST initialisiert, durchläuft die Teilnehmereinrichtung TE dabei ein Prüfprogramm. Dessen Ergebnisse können sowohl von der Teilnehmereinrichtung TE, als auch durch das Fernabfragegerät FAG ausgegeben werden. Alternativ oder ergänzend dazu kann das Fernabfragegerät FAG einen Fehlerspeicher der Teilnehmereinrichtung TE auslesen, in den die Steuereinheit STTE die im Betrieb aufgetretenen Fehlfunktionen abgespeichert hat. Eine weitere Testmöglichkeit besteht darin, daß die Steuereinheit ST einzelne Baugruppen der Teilnehmereinrichtung TE direkt ansteuert und anschließend deren Ausgangssignale auswertet. Wurde die Teilnehmereinrichtung TE derart getestet, können die Testergebnisse durch die Steuereinheit ST an die Anzeige der Teilnehmereinrichtung TE und/oder einen am Fernabfragegerät FAG angeschlossenen Drucker weitergeleitet werden.

## Patentansprüche

1. Verfahren zur Fernabfrage einer Zugangsberechtigung (ZB) für eine Teilnehmereinrichtung (TE), wobei nach Eingabe einer Rufnummer über ein Nachrichtennetz eine bidirektionale Verbindung zwischen einem Fernabfragegerät (FAG) und der Teilnehmereinrichtung (TE) aufgebaut wird und Daten aus einem Speicher (SPTE) der Teilnehmereinrichtung (TE) augelesen werden,
**dadurch gekennzeichnet**, daß
die Steuereinheit (ST) des Fernabfragegerätes (FAG) die in dem Speicher (SPTE) der Teilnehmereinrichtung (TE) abgespeicherte Seriennummer (SN) und sonstige Daten der Teilnehmereinrichtung (TE) ausliest und daß die Steuereinheit (ST) des Fernabfragegerätes (FAG) aus der Seriennummer (SN) der Teilnehmereinrichtung (TE) durch Anwendung eines im Fernabfragegerät (FAG) abgespeicherten Algorithmus (AG) die Zugangsberechtigung (ZB) berechnet und ausgibt.

2. Verfahren nach Anspruch 1,
**dadurch gekennzeichnet**, daß
das Fernabfragegerät (FAG) die Zugangsberechtigung (ZB) optisch an einer Anzeige des Fernabfragegerätes (FAG) ausgibt und/oder über das Nachrichtennetz überträgt und an der Teilnehmereinrichtung (TE) optisch ausgibt und/oder daß das Fernabfragegerät (FAG) die Zugangsberechtigung (ZB) durch einen Sprachsynthesizer und Lautsprecher akustisch am Fernabfragegerät (FAG) ausgibt und/oder über das Nachrichtennetz überträgt und an der Teilnehmereinrichtung (TE) akustisch ausgibt.

3. Verfahren nach den Ansprüchen 1 oder 2,
**dadurch gekennzeichnet**, daß
nach dem Auslesen der Seriennummer (SN) der Teilnehmereinrichtung (TE) durch das Fernabfragegerät (FAG) eine Fehlerdiagnose der Teilnehmereinrichtung (TE) durchgeführt wird, bei der die Baugruppen der Teilnehmereinrichtung (TE) auf ihre Funktionsfähigkeit überprüft werden und danach an Teilnehmereinrichtung (TE) und Fernabfragegerät (FAG) eine Meldung in optischer und/oder akustischer Form hinsichtlich überprüfter Baugruppen und aufgetretener Fehler ausgegeben und/oder gespeichert wird.

4. Verfahren nach einem der Ansprüche 1 bis 3,
**dadurch gekennzeichnet**, daß
die Steuereinheit (ST) des Fernabfragegerätes (FAG) die Seriennummer (SN) der Teilnehmereinrichtung (TE), zu der eine Nachrichtenverbindung besteht, mit abgespeicherten Seriennummern (SN) von gestohlen gemeldeten Teilnehmereinrichtungen (TE) vergleicht und bei einer Übereinstimmung eine Meldung am Fernabfragegerät (FAG) ausgibt.

5. Fernabfragegerät zur Durchführung des Verfahrens nach einem der Ansprüche 1 bis 4, welches eine Steuereinheit (ST), einen Speicher (SPFAG) und Übertragungsmittel (Ü) aufweist,
**dadurch gekennzeichnet**, daß
in die Steuereinheit (ST) des Fernabfragegerätes (FAG) ein Speicher (SPFAG) monolithisch integriert ist, der nicht über die Anschlüsse der Steuereinheit (ST) des Fernabfragegerätes (FAG) oder über sonstige Anschlüsse auslesbar ist, daß der Algorithmus (AG) zur Berechnung der Zugangsberechtigung (ZB) aus der Seriennummer (SN) einer Teilnehmereinrichtung (TE) in diesem Speicher (SPFAG) abgespeichert ist, wodurch der Algorithmus (AG) nicht ausgelesen werden kann und daß das Fernabfragegerät (FAG) einen zweiten größeren Speicher (SP2FAG) zur Speicherung von Seriennummern (SN) gestohlener Teilnehmereinrichtungen (TE) aufweist.

6. Fernabfragegerät nach Anspruch 5,
**dadurch gekennzeichnet**, daß
es einen Rufnummernspeicher (SPRN) zur Speicherung von Rufnummern und einen Wählautomaten zum Verbindungsaufbau mit einer der Rufnummer zugeordneten Teilnehmereinrichtung (TE) aufweist, deren Zugangsberechtigung (ZB) ermittelt werden soll und daß es einen Ausgabespeicher aufweist, in dem die Ausgangssignale des Fernabfragegerätes (FAG) gespeichert werden.
